# EUROPEAN PATENT APPLICATION

(11) **EP 1 009 129 A2**
(43) Date of publication of application: **14.06.2000**
(21) Application number: 99480024.1
(22) Date of filing: 15.04.1999
(51) Int. Cl.: H04L 12/46

(54) **System and method for assigning labels in a data transmission network using label switching**

(30) Priority: 11.12.1998 EP 98480086
(71) Applicant: INTERNATIONAL BUSINESS MACHINES CORPORATION, Armonk, NY 10504 (US)
(72) Inventor: Le Pennec, Jean-François, 06100 Nice (FR); Fieschi, Jacques, 06700 Saint Laurent du Var (FR); Benayoun, Alain, 06800 Cagnes sur Mer (FR); Galand, Claude, 06480 la Colle sur Loup (FR)
(74) Representative: Etorre, Yves Nicolas

(57) **Abstract**

System and method for assigning labels in a data transmission network (10) in which flows of data composed of packets (16) are transmitted from a source node to a destination node through a plurality of switching nodes and of the type wherein an identification label (18) identifying each flow of data is added by a transmitting node (12) to each packet of the flow of data before the packet is transmitted from the transmitting node to a receiving node (14) adjacent to the transmitting node, the identification label being recognized by the receiving node for the identification of the flow of data. Each switching node comprises identical label assignment means (20 or 22) for generating an identification label each time a new flow of data is received by the node, the label assignment means of the transmitting node and of the receiving node both generating an identical label when they both receive the flow of data, thereby avoiding the transmitting node (or the receiving node) from having to send the identification label to the receiving node (or the transmitting node) in order to be recognized by the receiving node when receiving the packets of said flow of data.

## Description

### Technical field

The invention relates generally to data transmission networks wherein flows of data are transmitted from a source node to a destination node through a plurality of switching nodes and particularly to a system and method for assigning labels in a data transmission network using label switching.

### Background

The use of networks based upon packet switching is more and more important today to transmit data, such networks being either Local Area Networks (LAN) or Wide Area Networks (WAN).

In most of these networks, each node is used as a switching node after the route for a flow of data from a source node to a destination node has been established by routers located at each node. The assignment of a particular packet to a particular flow of data is in fact done just one, as the packet enters the network. The flow to which the packet is assigned is associated with a short fixed length value known as a « label ». When a packet is forwarded to the next switching node, the label is sent along with it. At subsequent nodes, there is no further analysis of the packet header. Rather, the label is used as an index into a table which specifies the next node, and a new label. The old label is replaced with the new label and the packet is forwarded to the next switching node.

The decision to bind a particular label to a particular flow of data is made either by the upstream switching node or by the downstream switching node with respect to the link between the two nodes. Such an assignment is made when the first frame of the flow is routed by the router of each node. A default label assigned to this first frame is replaced by the assigned label.
A label distribution protocol is used by the switching node which assigns the label to inform the linked switching node (either upstream or downstream) of the assigned label. If it is the upstream switching node which is in charge of assigning the label (forward label assignment mechanism), it sends a message containing the assigned label to the downstream switching node. This one sends back an acknowledgement to the upstream switching node. Upon reception of the acknowledgement, the upstream switching node may start transmitting packets wherein the default label has been replaced by the assigned label.

If it is the downstream switching node which has to assign the label (backward label assignment mechanism), it does this assignment upon reception of the first packet of a new flow of data (including a default label). Then, the label distribution protocol is used by the downstream switching node to send back a message containing the assigned label to the upstream switching node. At this time, the upstream switching node may start transmitting packets wherein the default label has been replaced by the assigned label.

Whatever label assignment mechanism is used, forward or backward, such a mechanism presents the drawback to introduce an important overhead in the transmission since messages have to be sent from a first switching node to a second switching in order to inform the latter of the assigned label. Furthermore, an additional protocol (label distribution protocol) has to be used for this label transmission.

Another drawback of this label assignment mechanism is that some delay is required to run the label distribution protocol procedure. As long as this procedure is not completed, the packets are routed by means of the router associated with the switching node. Inasmuch as several packets have to be routed and not only the first one, this requires to have high performance routers and therefore expensive.

### Summary of the invention

Accordingly, the object of the invention is to provide a system for assigning labels in a data transmission network, which does not introduce transmission overhead and does not require to have a high-performance router at each network node.

Another object of the invention is to achieve a method of assigning labels in a data transmission network, which does not introduce any delay and overhead in the transmission.

Therefore, the invention relates to a system for assigning labels in a data transmission network in which flows of data composed of packets are transmitted from a source node to a destination node through a plurality of switching nodes and of the type wherein an identification label identifying each flow of data is added by a transmitting node to each packet of the flow of data before the packet is transmitted from the transmitting node to a receiving node adjacent to the transmitting in the network, the identification label being recognized by the receiving node for the identification of the flow of data. Each switching node of the network comprises identical label assignment means for generating an identification label each time a new flow of data is received by this switching node. Therefore, the label assignment means of the transmitting node and of the receiving node both generate an identical label when they both receive the flow of data, thereby avoiding the transmitting node (or the receiving node) from sending the identification label to the receiving node (or the transmitting node) in order to be recognized by the receiving node when receiving packets of the flow of data.

According to another aspect, the invention relates to a process wherein the identification labels are generated in a first time by filling an assigned label table with the headers of the flow of data being transmitted from the transmitting node to the receiving node and taking the address of the location wherein is stored the header as identification label of the corresponding flow of data, and are generated in a second time, by using a label stored in a free label table filled with a list of labels which are made free using predefined criteria.

### Brief description of the drawings

The above and other objects, features and advantages of the invention will be better understood by reading the following more particular description of the invention presented in conjunction with the accompanying drawings wherein :
Fig. 1 represents schematically a network with a transmitting node linked to an adjacent receiving node for the transmission of a packet wherein an identification label generated by both transmitting node and receiving node is added to the packet,
Fig. 2 is a flow chart of the process of generating labels by both transmitting node and receiving node as long as the assigned label table is not full,
Fig. 3 is a block-diagram representing the assigned label table, the free label table and the label assigning mechanism for controlling the tables,
Fig. 4 is a flow chart of the process of generating labels by both transmitting node and receiving node by freeing a list of new labels when the assigned label table is full, and
Fig. 5 is a flow chart of the process enabling a new list of free labels to be written in the free label table.

### Detailed description of the invention

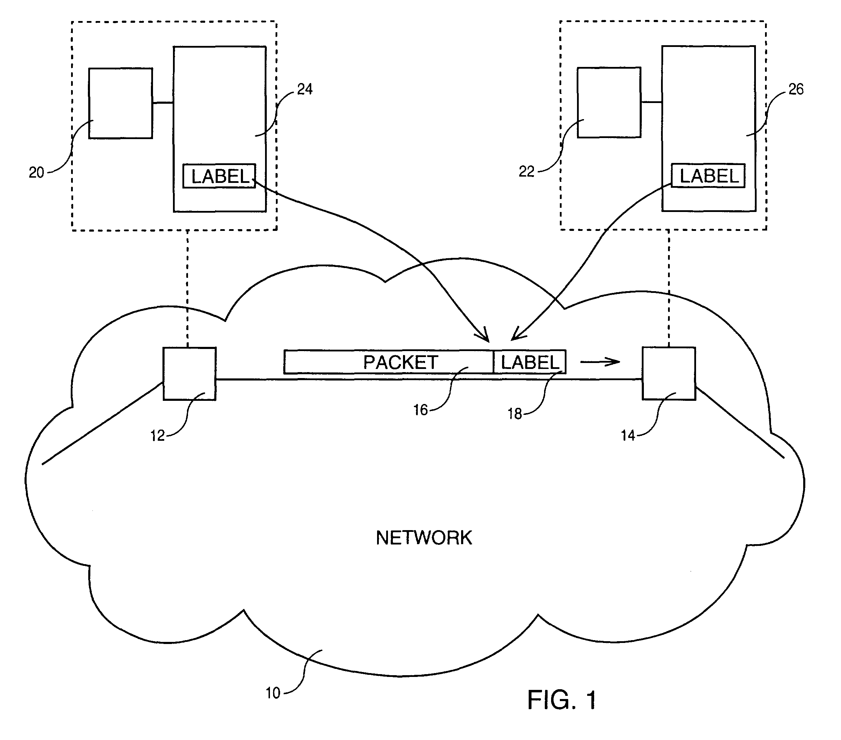

As illustrated in Fig. 1, a network 10 in which the invention can be used includes a plurality of switching nodes amongst which only switching node 12 used as a transmitting node and adjacent switching node 14 used as a receiving node have be represented. Of course, switching node 14 could be a transmitting node and switching node 12 a receiving node for other data transmissions between the two nodes.

In a general way, when a packet 16 is received in switching node 12, a classification process identifies if this packet belongs to a known flow of data. This may be simply achieved if the packet contains in its header a flow-id field, or a classification may be based on other parameters available in the packet such as « Destination address », « Source address », « Port number », « Protocol » ... when a packet 16 is recognized as belonging to a known flow to which has been assigned a specific label 18, it may be switched by using this label and forwarded to switching node 14. Switching node 14 knows how to switch or route the packet 16 transmitted with label 18, for example by performing a label swapping to the next node of the path or removing the label if node 14 is the last switching node in the network.

If a packet arriving in switching node 12 is not associated with an existing flow of data and does not have an assigned label to use, it is processed by a label assigning mechanism 20 while the packet is forwarded with a default label used only to transport the first packet of a flow of data. The receiving switching node 14 includes a label assigning mechanism 22 identical to label assigning mechanism 20, and when it receives the packet with the default label, the same algorithm is run by label assigning mechanism 22. Accordingly, a same label is generated by both mechanisms 20 and 22. The label is stored in an assigned label table 24 in switching node 12 and in an assigned label table 26 in switching node 14, together with the header bytes of the packet. Then, for the subsequent packets of the flow of data, switching node 12 adds this label to the packet before forwarding it to switching node 14 which is able to recognize the label and the associated flow of data thanks to the label value stored in table 24.

It should be noted that the storage of the header in assigned label table 24 or 26 is used to characterize the flow when necessary in the flow classification process. It may be, in some cases, only necessary to store the flowid value if available. However, the header may be also interesting for some additional functions such as compression, encryption, prioritization that may use some of the stored header fields. In the receiving node, as there is no flow classification to perform, the storage of the header is only useful for the above mentioned additional functions or for a verification that there is no miss-assignment of the label.

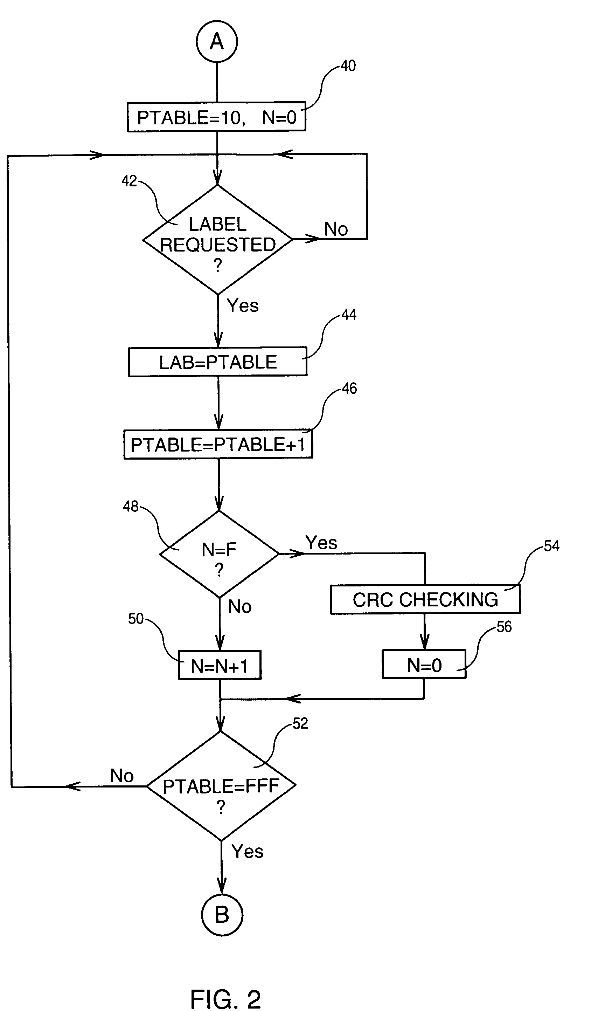

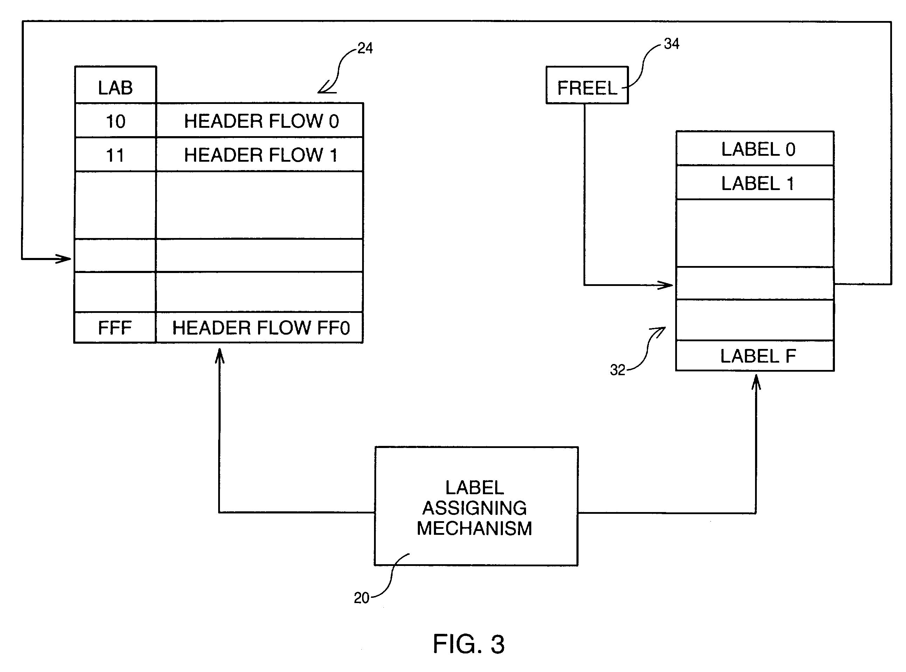

At the beginning of the communication or after a reset of the tables 24 and 26, all the labels are free to be assigned. The process of assigning label as long as table 24 (or table 26) is not full is illustrated by the flowchart A of Figure 2. An example of table 24 (which could also be table 26 of Fig. 1) is represented in Fig. 3 wherein LAB is the label value which is in fact the address of table 24. Note that each LAB value is associated with a header detected and stored by the switching node when receiving the first packet of the flow.

When the process is started, a variable N is set to 0 (step 40) and a pointer PTABLE to assigned label table 24 is set to a value different from 0, for example F (in hexadecimal). This is because a set of predefined label values have to be reserved to transmit non-switched information such as one or several default labels for the first packets of the flows, labels for frames requesting no label attribution, etc.

Then, the process is waiting for a new label request (step 42). When such a request occurs, the variable LAB is set to PTABLE (step 44) and pointer PTABLE is incremented to PTABLE + 1 (step 46). A test is then made to check whether the variable has reached a predetermined limit for example N=F (step 48). If not, variable N is incremented to N+1 (50) and a test is made to check whether pointer PTABLE has reached the limit of the table, for example FFF corresponding to a table address of 12 bits (step 52). It must be noted that the capacity of the assigned label table is determined in function of each link between the transmitting node and the receiving node, but is generally between one byte and three bytes. Finally, as long as the value of PTABLE has not reached the limit, the process is looped again to the starting test waiting for a new label request (step 42).

The test of determining whether the variable N has reached its limit value F (step 48) is used to have a regular checking that both tables of the transmitting switching node and of the receiving switching node are identical. Therefore, when N=F, a CRC of both tables is performed (step 54) and the two nodes exchange a CRC message to verify they are in line. If not, an error handling process is run. Such a process is well known and will not be described here. Note that such an error handling process can result in a reset of the assigned label table. Most of the time, there is no problem and N is reset to 0 (step 56) before continuing the process. This one is repeated until pointer PTABLE reaches the table limit, FFF, in which case a new label assignment process B is run as described hereafter.

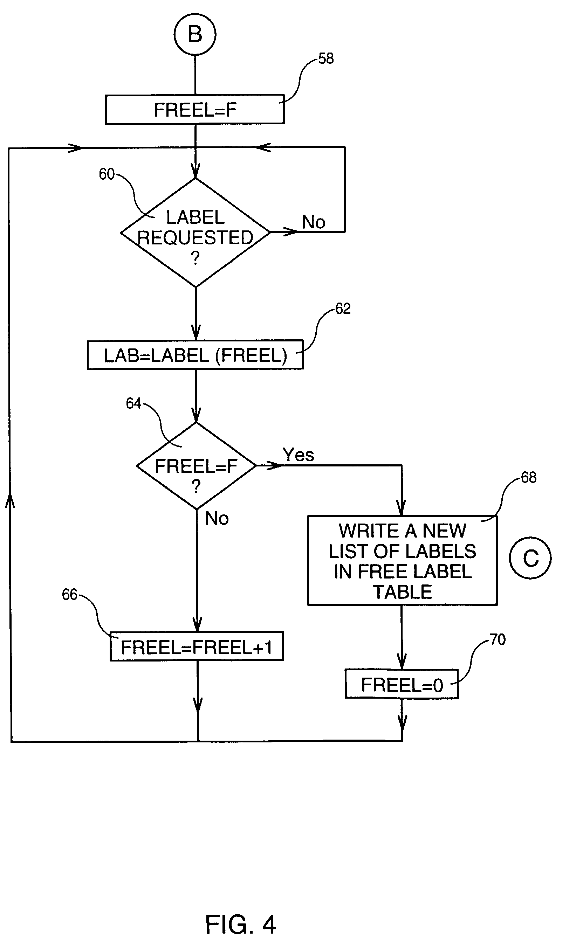

When the assigned label table is full, there is no way to assign a new label without taking off some currently assigned labels, removing their association with the associated flow of data to free the label for a new utilization. The process of assigning free labels is illustrated by flow chart of Fig. 4 in connection with the schematic diagram of Fig. 3.

For this process, a free label table (32) of labels to be assigned is associated to assigned label table 24 storing the labels values associated respectively to the headers of the flows of data transmitted between the transmitting switching node and the receiving switching node.

When process B is started, a variable FREEL is set (step 58) to a predetermined value, for example F (in hexadecimal) which is a pointer 34 to free label 32 (see Fig.3). Then, the process is waiting for a new label request (step 60). When such a request occurs, the variable LAB is set to the label value LABEL contained in the location of table 32 designated by pointer FREEL (step 62). This means that LAB is the label value to be associated with the next packet header to be stored at the address having the LAB value.

Then a test is made (step 64) to determine whether the variable FREEL has reached the limit address (for example F) of free label table 32. If not, FREEL is incremented by one (step 66) and the process returns to the step of waiting for a request of new label (step 60). The capacity of free label table 32 is defined by the user and could be different from F.

When the value of pointer FREEL reaches the limit of free label table 32, this one is filled with a new list of labels (step 68) generated by the label assigning mechanism 20 or 24 of the node and pointer FREEL is reset to 0 (step 70) before the process is returned to the step of waiting for a new request of label.

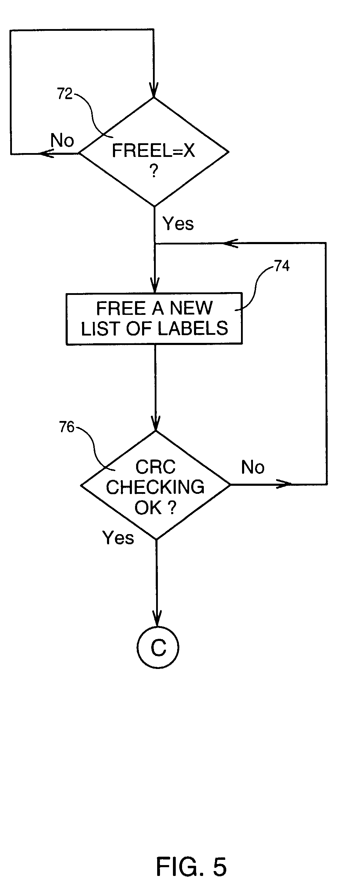

The writing of the list of labels in the free label table results from a process described in the flow chart of Fig. 5. When the value of pointer FREEL reaches a predetermined value X less than F (step 72) a new list of labels is freed (step 74) by deleting existing labels by using defined deletion criteria.

Then, a CRC checking is made (step 76) on the new list of labels by transmitting (or receiving node) to the other node in order to verify that the list of labels generated by the transmitting switching node is identical to the list of labels generated by the receiving switching node.

The criteria used by the label assigning mechanism (20 or 22) for setting a free label can be the age of the labels or the number of occurrences during the window separating two CRC checkings. For example, values of age and/or number of occurrences may be stored in additional fields in tables 24 and 26 and updated each time a label is used. Only one of these criteria may be used or both. When both criteria are used, a first sorting is made on the first criterion which may provide more candidates than the necessary number of labels. The second criterion is then used to perform an additional selection. In case of identical sorting characteristics for more than one label it is necessary to introduce a priority order, e.g. using the label value ; because values cannot be identical.

## Claims

1. System for assigning labels in a data transmission network (10) in which flows of data composed of packets (16) are transmitted from a source node to a destination node through a plurality of switching nodes and of the type wherein an identification label (18) identifying each flow of data is added by a transmitting node (12) to each packet of said flow of data before said packet is transmitted from said transmitting node to a receiving node (14) adjacent to said transmitting node in said network, said identification label being recognized by said receiving node for the identification of said flow of data ;
Said system being characterized in that each one of said plurality of switching nodes comprises identical label assignment means (20 or 22) for generating an identification label each time a new flow of data is received by the node, the label assignment means of said transmitting node and of said receiving node both generating an identical label when they both receive said flow of data, thereby avoiding said transmitting node (or said receiving node) from having to send said identification label to said receiving node (or said transmitting node) in order to be recognized by said receiving node when receiving said packets of said flow of data.

2. System according to claim 1, wherein both said transmitting node (12) and said receiving node (14) include an assigned label table (24 or 26) the locations of which are filled by the packet headers of the flows of data transmitted from said transmitting node to said receiving node, each address of said table being the identification label (LAB) generated by said label assignment means (20 or 22) and identifying the flow of data whose packet header is stored in the corresponding location.

3. System according to claim 2, wherein both said transmitting node (12) and said receiving node (14) include a free label table (32) the locations of which are filled by labels which are made free by said label assignment means (20 or 22).

4. System according to claim 3, wherein a pointer (FREEL) is associated with said free label table (32) to designate the location of said table containing the next label to be generated by said label assignment means (20 or 22) when a new flow of data is transmitted from said transmitting node (12) to said receiving node (14).

5. System according to any one of claims 2 to 4, wherein both said transmitting node (12) and said receiving node (14) comprise checking means for running a CRC checking of said assigned label table (24 or 26).

6. System according to claim 3 or 4, wherein both said transmitting node (12) and said receiving node (14) comprise checking means for running a CRC checking said labels made free by said label assignment means (20 or 22).

7. Process for assigning labels in a data transmission network (10) in which flow of data composed of packets (16) are transmitted from a source node to a destination node through a plurality of switching nodes and of the type wherein an identification label (18) identifying each flow of data is added by a transmitting node (12) to each packet of said flow of data before said packet is transmitted from said transmitting node to a receiving node (14) adjacent to said transmitting node in said network, said identification label being recognized by said receiving node for the identification of said flow of data, said process being characterized in that an identical label (18) is generated by both said transmitting node (12) and said receiving node (14) each time a new flow of data is transmitted from said transmitting node to said receiving node thereby avoiding said transmitting node (or said receiving node) from having to send said identification label to said receiving node (or said transmitting node) in order to be recognized by said receiving node when receiving said packets of said flow of data.

8. Process according to claim 7, wherein said identification labels are generated in a first time by filling an assigned label table (24 or 26) with the headers of the flow of data being transmitted from said transmitting node (12) to said receiving node (14) and taking the address of the location wherein is stored said header as identification label of the corresponding flow of data.

9. Process according to claim 8, wherein said identification labels are generated in a second time by using a label stored in a free label table filled with a list of labels which are made free using predefined criteria.

10. Process according to claim 9, wherein a pointer (FREE) is used to designate the location of said free label table (32) containing the next label to be used when a new flow of data is transmitted from said transmitting node (12) to said receiving node (14), said pointer being incremented each time a new label is assigned.

11. Process according to any one of claims 8 to 10, wherein a CRC checking of said assigned label table (24 or 26) is run in both said transmitting node (12) and said receiving node (14) each time a predetermined number (N) of identification labels has been generated.

12. Process according to claim 9 or 10, wherein a CRC checking of said free label table (32) is run in both said transmitting node (12) and said receiving node (14) each time said list of labels are made free.

13. Process according to claim 12 wherein said predefined criteria for making free said list of labels are the age of the labels and/or the number occurrences since the preceding CRC checking.
